# EUROPEAN PATENT APPLICATION

(11) **EP 2 801 895 A2**
(43) Date of publication of application: **12.11.2014**
(21) Application number: 14165066.3
(22) Date of filing: 17.04.2014
(51) Int. Cl.: G06F 3/048

(54) **Method and apparatus for displaying input interface in user device**

(30) Priority: 07.05.2013 KR 20130051370
(71) Applicant: Samsung Electronics Co., Ltd, Gyeonggi-do 443-742 (KR)
(72) Inventor: Yang, Jingil, 443-742 Gyeonggi-do (KR); Seo, Yunju, 443-742 Gyeonggi-do (KR); Woo, Seungsoo, 443-742 Gyeonggi-do (KR); Yim, Saemee, 443-742 Gyeonggi-do (KR); Choi, Sookkyung, 443-742 Gyeonggi-do (KR)
(74) Representative: Birchenough, Lewis

(57) **Abstract**

Disclosed is a method and apparatus for displaying an input interface of a user device. The method of displaying the input interface includes: receiving an input interface display request; determining whether a preferred input mode according to a user's use record for an application exists; and when existing, displaying an input interface according to the preferred input mode.

## Description

### BACKGROUND

### 1. Technical Field

The present disclosure is directed to a user device, and more particularly, to a method and an apparatus for displaying an input interface of a user device.

### 2. Description of the Related Art

User devices have recently developed into multimedia devices capable of providing an assortment of services, such as digital organizers, games, schedulers, etc. When user devices provide such services, a user interface should be capable of managing and using the various additional services in a way that is convenient for the user.

Conventional methods of supporting various input modes in a user device may always display a basic input mode, a most recently used input mode, or an input mode previously set in accordance with input content. Conventional techniques may also display an input mode suitable for URL/URI or web page locale information, may individually designate the input mode in accordance with a destination partner, or display the designated input mode, etc.

### SUMMARY

Unfortunately, conventional techniques may not be able to display an input mode that reflects a user's preference. Thus, the user may be required to manually change the input mode, which could be an inconvenience to the user. In addition, even if an input mode is preconfigured, it may be burdensome to change the setting every time a user's preference changes.

The techniques disclosed herein address the above-mentioned problems by providing a method and an apparatus for displaying an input in accordance with an input mode preferred by a user.

More specifically, the present disclosure provides a method and apparatus for displaying an input mode preconfigured by a user in an input mode user record. In one example, the input mode user records may be classified by application, internet site or conversation partner. The user's preferred input mode may be displayed based on the record.

In one aspect of the present disclosure, a method may include: receiving an input interface request; identifying whether a preferred input mode for the input interface is preconfigured; and displaying a preconfigured input interface, when the input mode for the input interface is preconfigured.

In accordance with another aspect of the present disclosure, a user device may display an input interface. The user device may include: a controller to: detect user input; display the input interface in accordance with an input mode; store a preferred input mode for the input interface in a storage unit; and display the preferred input mode of the input interface, when the preferred input mode for the input interface is found in the storage unit.

In accordance with another aspect of the present disclosure, an input mode desired by the user may be displayed when initiating an application or an Internet site in view of the input mode use record. In addition, a preferred input mode may be preconfigured with the input mode use record. Thus, even if the user's preference changes, it is not necessary to manually set another input mode in order to reflect the change.

### BRIEF DESCRIPTION OF THE DRAWINGS

The above and other aspects, features, and advantages of the disclosure will be more apparent from the following detailed description taken in conjunction with the accompanying drawings, in which:
FIG. 1 is a block diagram illustrating an example internal configuration of a user device 100 in accordance with aspects of the present disclosure;
FIG. 2 is a working example of an input mode use record table in accordance with aspects of the present disclosure;
FIG. 3 illustrates a working example of a preferred input mode table in accordance with aspects of the present disclosure.
FIG. 4 is a flowchart illustrating an example input interface display process of the user device in accordance with aspects of the present disclosure;
FIG. 5 is a flowchart illustrating an example process of storing an input mode use record in accordance with aspects of the present disclosure; and
FIG. 6 is a flowchart illustrating an example process of determining a preferred input mode of step S330 in FIG. 3.

### DETAILED DESCRIPTION

Hereinafter, the present disclosure will be described with reference to the examples and accompanying drawings. It is noted that, where possible, the same reference numerals are designated to the same components in the accompanying drawings. A detailed description will be omitted of known functions or configurations which may obscure the subject matter of the present invention.

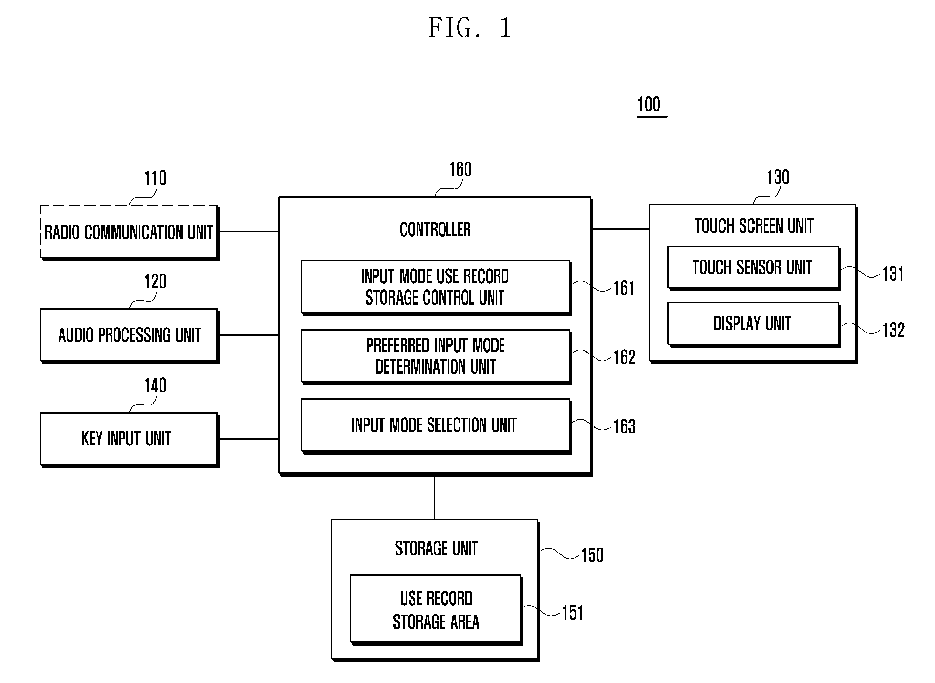

FIG. 1 is a block diagram illustrating an example internal configuration of a user device 100. It is understood that the user device shown in FIG. 1 is for illustrative purposes and that other configurations may be utilized by adding or deleting components to or from the device shown in FIG. 1. As illustrated in FIG. 1, the user device 100 may include a radio communication unit 110, an audio processing unit 120, a touch screen unit 130, a key input unit 140, a storage unit 150, and a controller 160.

The radio communication unit 110 executes a data transmission/reception function for radio communication of the user device 100. The radio communication unit 110 may be configured by, for example, an RF transmitter configured to up-convert the frequency of a transmitted signal and amplify the signal, and an RF receiver configured to low-noise-amplify a received signal and down-convert the frequency of the received signal. In addition, the radio communication unit 110 may receive data through a radio channel and output the data to controller 160, and may transmit data output from the controller 160 through the radio channel.

In FIG. 1, the radio communication unit 110 is indicated by a dotted line because the user device may be configured without the radio communication unit 110. For example, the user device may be an MP3 player or a Portable Multimedia Player (PMP) such that the radio communication unit 110 is not needed.

The audio processing unit 120 may be configured by a CODEC which is configured by a data CODEC configured to process packet data or the like and an audio CODEC configured to process an audio signal such as a sound. The audio processing unit 120 converts a digital audio signal into an analog audio signal through the audio CODEC so as to reproduce the analog audio signal through a speaker (SPK), and converts an analog audio signal input from a microphone (MIC) into a digital audio signal through the audio CODEC.

The touch screen unit 130 may include a touch sensor unit 131 and a display unit 132. The touch sensor unit 131 senses a user's touch. The touch sensor unit 131 may be configured by a touch sensor such as a capacitive overlay sensor, a resistive overlay sensor, or an infrared beam sensor, or configured by a pressure sensor. In addition to the sensors described above, all kinds of sensor devices capable of sensing contact or pressure of an object may be configured as touch sensor unit 131. The touch sensor unit 131 may sense a user's touch and transmit a sensing signal to controller 160. The sensing signal may include coordinate data of the touch-input by the user. When the user inputs a moving touch operation, touch sensor unit 131 may generate a sensing signal that includes coordinate data of a moving touch position route and transmits the sensing signal to controller 160.

Display unit 132 may be formed of a Liquid Crystal Display (LCD), an Organic Light Emitting Diode (OLED), an Active Matrix Organic Light Emitting Diodes (AMOLED), etc. and provides the user with a menu of the user device 100, input data, function setting information, and a variety of other visual information items. The display unit 132 conducts a function of outputting a booting screen of the user device 100, a standby screen, a menu screen, a communication screen, and other application screens. While the user device 100 may include a touch screen as described above, other examples may not utilize a touch screen. In this instance, the touch screen unit 130 illustrated in FIG. 1 may be used merely for display.

The key input unit 140 (or input unit) receives an input of a user's key operation for controlling the user device 100 and generates and transmits an input signal to the controller 160. The key input unit 140 may be configured as a keypad including digit keys and direction keys or may be configured as a predetermined function key on a surface of user device 100. When the user device is configured to allow all the operations with touch screen unit 130, the key input unit 140 may be omitted.

Storage unit 150 serves to store programs and data and may be divided into a program area and a data area. The program area may store a program that controls the overall operation of the user device 100, an Operating System (OS) that boots the user device 100, an application program required for reproducing multimedia contents or the like, and an application program required for other optional functions, for example, a camera function, a sound reproducing function, an image or video reproducing function of the user device 100, etc. The data area is an area where data is generated when the user device 100 is used and may store an image, a video, a phone book, audio data, etc.

In one example, the storage unit 150 may further include a use record storage area 151 configured to store the user's input mode use record, and a preferred input mode associated with the input mode use record.

The controller 160 controls the overall operation for each component of the user device. For example, when there is a display request for an input interface, controller 160 may execute a series of processes that display the input interface in accordance with an input mode preferred by the user. In this instance, the controller 160 may further include an input mode use record storage controller 161, a preferred input mode determination unit 162, and an input mode selection unit 163.

The input mode use record storage controller 161 may record an input mode associated with each application whenever the use of the input interface is terminated. In another example, the input mode use record may also be stored while the input interface is being used.

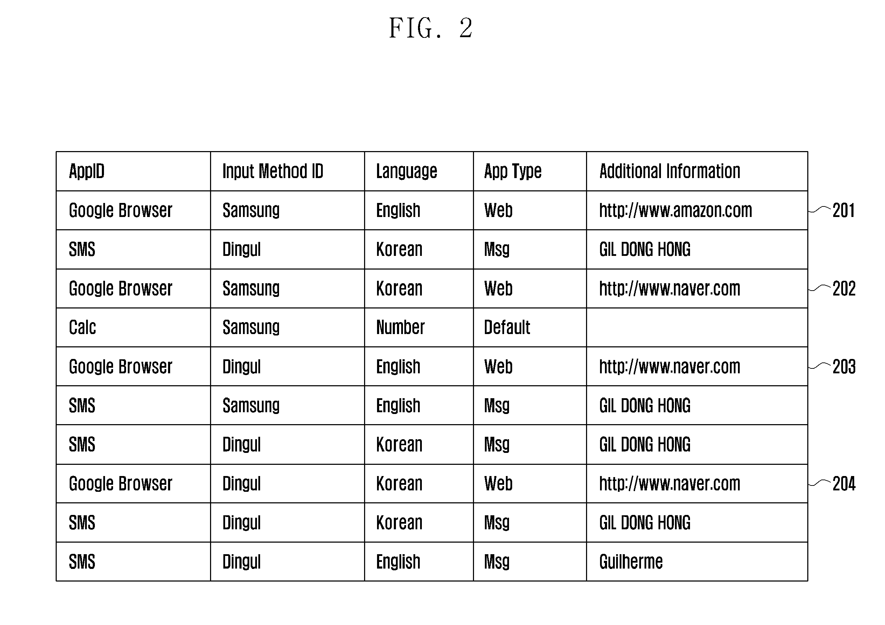

When storing the input mode use record, the input mode use record storage controller 161 may store an application identifier ("App ID"), an input interface provider, an input type, an additional information use indicator, and additional information. In this instance, the input mode use record storage controller 161 may store the above-mentioned items in a form of a table as shown in the example of FIG. 2.

FIG. 2 is an example of an input mode use record table in accordance with aspects of the present disclosure. The "App ID" field may be used to differentiate between applications. In FIG. 2, applications such as Google Browser, SMS, calculator ("Calc"), etc. are shown, and example identifiers associated with each application are used to identify each application. In one example, an application identifier may be provided using a series of bits, such as: Google Browser is 0001, SMS is 0010, Calc is 1100, and so on.

The input interface provider field may contain information associated with an input interface provider. The input interface may be provided from various user device manufacturers and/or application developers. In the example of FIG. 2, the input interface provider field is entitled "Input Method ID" and some records are shown as having providers such as Samsung and Dingul.

The input type may refer to the type of data input via the input interface. For example, input types may include, but are not limited to, a sound, a gesture, a text, a still image, a moving image, etc. While the input type field shown in FIG. 2 is entitled "Language," it is understood that the input type may also include digits, symbols, special characters, etc. In one example, an input mode may be defined as the type of input set for an input interface.

Additional information use indicator may refer to an identifier that indicates whether to use additional information when the user's preferred input mode is determined. In FIG. 2, the additional information use indicator field is labeled as "App Type". When the additional information use indicator is set to "Default," additional information is not used when the user's preferred input mode is determined. When the additional information use indicator is set to something other than "Default," (e.g., "Web", "Msg", etc.), the additional information may be used when the user's preferred input mode is determined.

The additional information, which is illustrated in FIG. 2 as the "Additional Information" field, includes information that may also be considered, when determining the user's preferred input mode. Additional information may include, for example, a web site, a conversation partner, etc. As described above, the input mode use record storage controller 161 may store an input mode use record that may include the above-described fields (e.g., App ID, input interface provider, input type, additional information use indicator, additional information, etc.) as shown in the table illustrated in FIG. 2.

The input mode use record storage controller 161 may also record other information, such as use time that indicates how much time an input interface was used. The input mode use record storage controller 161 may also accumulate information in order to analyze the user's preference or periodically delete, at least partially, recorded information to prevent the table from becoming considerably large.

The preferred input mode determination unit 162 may identify a preferred input mode based on the input mode use record stored by the input mode use record storage controller 161. For example, the preferred input mode determination unit 162 may identify the preferred input mode for each application associated with an input mode use record. In another example, the preferred input mode determination unit 162 may analyze the records a predetermined number of times in order to improve the accuracy of the user's preference estimate.

Based on the input mode use records illustrated in FIG. 2, a process of determining the preferred input mode by the preferred input mode determination unit 162 will be described in detail below.

In the example table shown in FIG. 2, records for three applications (Google Browser, SMS, and Calc) are stored therein.

For the calculator (Calc) application, since only one record exists, the preferred input mode determination unit 162 identifies the input type a "number" and the input interface provider as "Samsung." Thus, the preferred input mode for the calculator application will be numbers and the calculator application that will be used is the one provided by "Samsung." When there is only one record associated with an application, as it is for the Calc application in the example of FIG. 2, the most recently used input mode of the application may be deemed the preferred input mode.

The example in FIG. 2 also illustrates four records (i.e., 501, 502, 503, and 504) associated with the Google Browser application. Here, the input interface providers ("Input Method ID") are shown as follows: Samsung (501, 502) and Dingul (503, 504); the input types ("Language") are indicated as: English (501, 503) and Korean (502, 504). In this instance, it may be difficult to determine the user's preference. Therefore, the preferred input mode determination unit 162 confirms the additional information use indicators ("App Type") to determine whether to use additional information when determining the preferred input mode. Here, since all the additional information use indicators for the Google Browser application are set to a value other than "Default," the preferred input mode determination unit 162 considers additional information when determining the preferred input mode. Thus, the preferred input mode determination unit 162 uses a web address recorded in the additional information item as a standard when determining the preferred input mode. At the website "http://www.amazon.com", the English input type of the Samsung input interface provider may be determined as the preferred input mode. Similarly, at the website http://www.naver.com", the preferred input mode determination unit 162 may determine the Korean input type of the Dingul input interface provider as the preferred input mode.

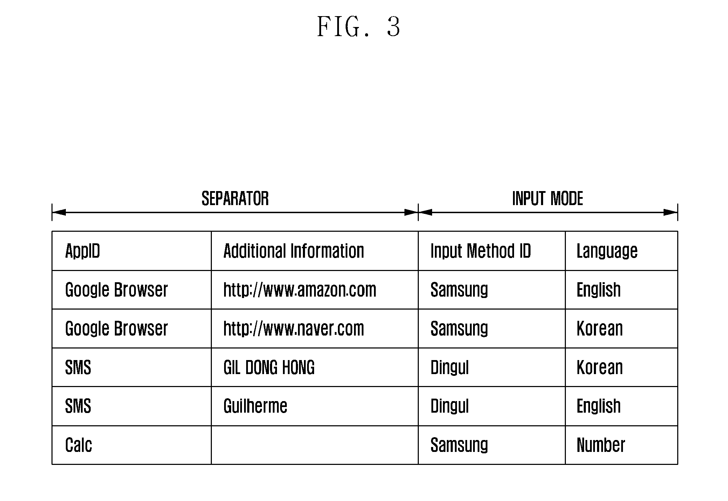

In addition to the table above, FIG. 3 illustrates an example preferred input mode table in accordance with aspects of the present disclosure. As illustrated in FIG. 3, the input mode for each application may be defined. Since it may be difficult to determine the preferred input mode using only an App ID in some cases, additional information may also be used in accordance with aspects of the present disclosure. Thus, when an App ID and additional information for the application are defined as separators, a preferred input mode may be defined as an input mode preferred by the user for each separator.

The preferred input mode determination unit 162 may update the preferred input modes whenever the user uses an input mode or it may update the input modes periodically. Thus, in one example, an input mode suitable for the user's situation may be continuously provided automatically without user intervention.

Returning to FIG. 1, when there is an input interface display request, the input mode selection unit 163 may display an input interface in accordance with a designated input mode, a preconfigured preferred input mode, or an input interface in accordance with a basic input mode. For example, when a previously designated input mode for an application exists, the input mode selection unit 163 may display the input interface in accordance with the previously designated input mode. In addition, when a previously designated input mode does not exist, the input mode selection unit 163 may identify whether a preferred input mode is preconfigured. When the preferred input mode is preconfigured, the input mode selection unit 163 displays the input interface in accordance with the preferred input mode. Otherwise, if no designated or preferred input mode is set, the input interface may be displayed in accordance with a basic input mode.

While the examples above have been described with reference to controller 160, input mode use record storage controller 161, preferred input mode determination unit 162, and input mode selection unit 163, it is understood that these components or modules are merely for illustrative purposes and that the techniques disclosed herein may be carried out with different configurations.

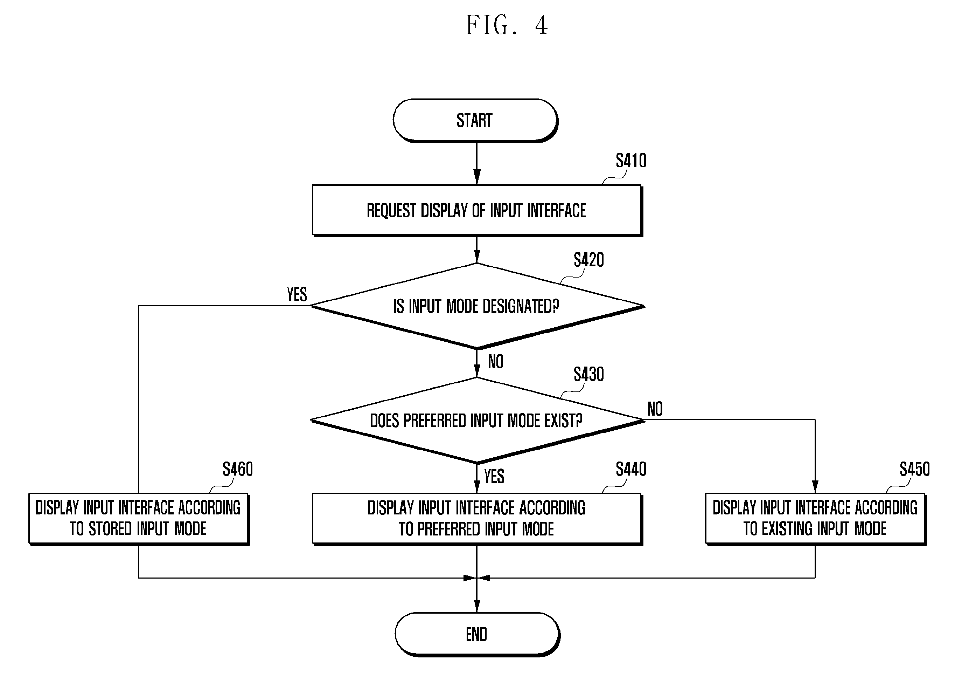

FIG. 4 is a flowchart illustrating an example input interface display process in accordance with aspects of the present disclosure.

Controller 160 receives a display request for an input interface, at S210. For example, a display request for an input interface may be triggered when an application requiring user input is executed (e.g., an e-mail application, a calculator application, an internet browser etc.). A user input ( e.g., an e-mail address, digits, a web page etc.) may be required following execution of the application.

In addition, the controller 160 may determine whether an input mode is designated, at S220. An application may designate a specific input mode in advance according to content the application accepts or has accepted as input. For example, when an e-mail address is input, an English input mode may be designated, and when a digit identification code is input, a digit input mode may be designated. When a designated input mode exists, controller 160 may display the input interface in accordance with the designated mode, at S260.

However, when no input mode is designated, controller 160 may determine whether a preferred input mode is preconfigured, at S230. Controller 160 may confirm whether information for the preferred input mode is stored in storage unit 150.

When the preferred input mode record is preconfigured, controller 160 displays the input interface in accordance with the preferred input mode, at S240. However, when the preferred input is not preconfigured, controller 160 displays the basic input mode, at S250. The basic input mode may be a fixed input mode or the most recently used input mode. Basic input modes may differ from one system to another.

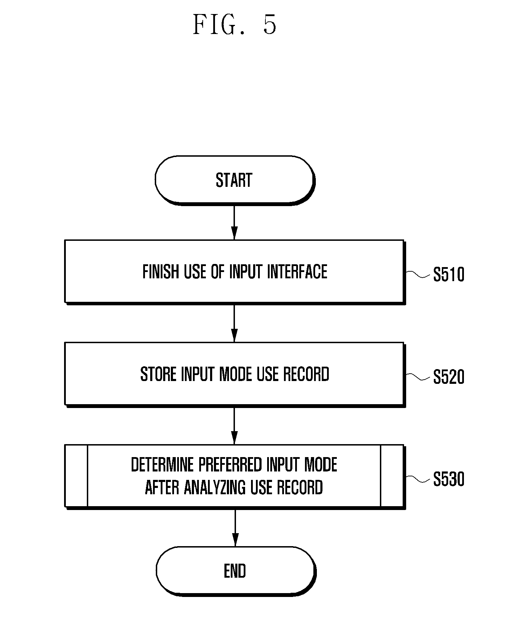

FIG. 5 is a flowchart illustrating an example process of storing an input mode use record in accordance with aspects of the present disclosure.

The controller 160 may detect that the input interface has terminated, at S310. Controller 160 may store an input mode use record, at S320. In one example, the input mode use record may include at least one of the following fields: App ID, input interface provider, input type, additional information use indicator, and additional information. Furthermore, input mode use records may be stored in the use record storage area 151 of storage unit 150 in the form of an input mode use record table as illustrated in FIG. 2.

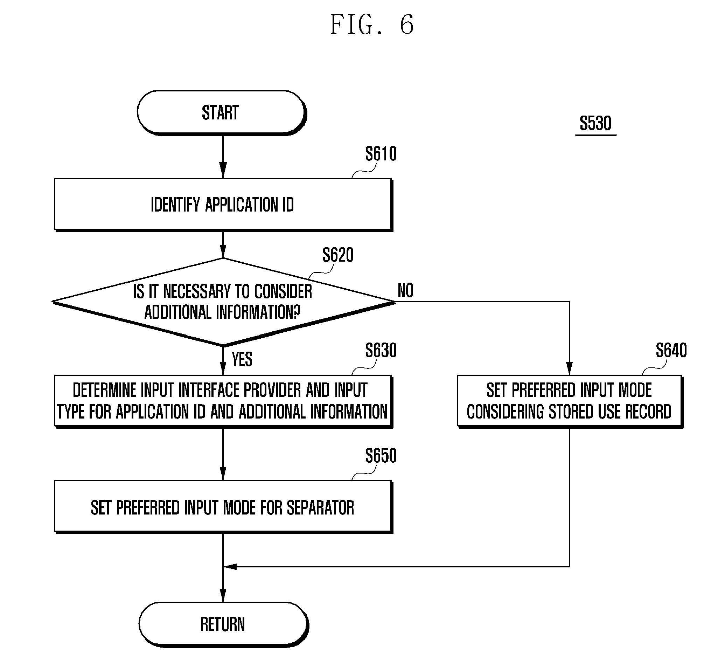

Controller 160 may analyze an input mode use record to identify a preferred input mode, at S330. A process of identifying a preferred input mode by controller 160 will also be described in detail with reference to FIG. 6.

While the example of FIG. 3 shows the input mode recorded after the input interface is terminated, it is understood that the input mode use information may be recorded at any time, such as while the input interface is being used.

FIG. 6 is a flowchart illustrating an example process of determining a preferred input mode described at S330 in FIG. 5. Controller 160 may identify an application ID at S410. This may be a process of searching the table illustrated in FIG. 2 for an ID associated with an application. At S420, controller 160 may identify whether to consider additional information to determine a preferred input mode. This may comprise identifying whether an additional information use indicator is set as Default in the input mode use record. As described above, when the additional information use indicator is set as Default, it is not necessary to use the additional information when identifying the preferred input mode. However, when the additional information use indicator is set as a value other than Default, the additional information may be considered when determining the preferred input mode.

When it is necessary to consider additional information, controller 160 may identify an input interface provider and an input type corresponding to the application ID and the additional information, at S430. In this instance, the application ID and the additional information may be referred to as separators. Controller 160 sets a preferred input mode for each separator, at S450. When additional information is not considered, controller 160 may set the preferred input mode based on user history records, at S440. For example, the most recently used input mode may be set as the preferred input mode.

Advantageously, the techniques described herein permit an input interface of an application or Internet site to be displayed in a preferred input mode, in view of input mode use records associated with the application or Internet site. In this regard, a user's preferred input mode may be displayed automatically at the user's convenience.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

## Claims

1. A method of displaying an input interface of a user device, the method comprising:
receiving an input interface request;
identifying whether a preferred input mode for the input interface is preconfigured; and
displaying a preconfigured input interface, when the input mode for the input interface is preconfigured.

2. The method of claim 1, further comprising:
storing an input mode use record associated with the input interface while the input interface is in use or when the input interface terminates; and
identifying the preferred input mode for the input interface based on the input mode use record.

3. The method of claim 2, wherein storing the input mode use record further comprises storing an application identifier (ID), an input interface provider, an input type, an additional information use indicator, or additional information.

4. The method of claim 3, wherein identifying the preferred input mode comprises:
identifying whether to consider additional information associated with the application identifier; and
identifying the preferred input mode associated with the application identifier based on the stored input mode use record, when the additional information is not considered, the preferred input mode further comprising information associated with the input interface provider and the input type.

5. The method of claim 4, further comprising identifying the preferred input mode associated with the application identifier and the additional information based on the stored input mode use record, when the additional information associated with the application identifier is considered.

6. The method of claim 4, wherein determining whether to consider the additional information includes determining the preferred input mode based on the additional information use indicator.

7. The method of claim 2, wherein storing the input mode use record further comprises deleting, at least partially, the stored input mode use record.

8. The method of claim 1, further comprising:
identifying whether a designated input mode exists; and
displaying the input interface in accordance with the designated input mode, when the designated input mode of the input interface is found.

9. A user device that displays an input interface, the user device comprising:
a controller to:
display the input interface in accordance with an input mode;
store a preferred input mode for the input interface in a storage unit; and
display the preferred input mode of the input interface, when the preferred input mode for the input interface is found in the storage unit.

10. The user device of claim 9, wherein the controller to further:
store an input mode use record associated with the input interface while the input interface is in use or when the input interface terminates; and
identify the preferred input mode for the input interface based on the input mode use record.

11. The user device of claim 10, wherein the input mode use record comprises an application identifier (ID), an input interface provider, an input type, an additional information use indicator, or additional information.

12. The user device of claim 11, when the controller to further:
identify whether to consider the additional information associated with the application identifier; and
identify the preferred input mode associated with the application identifier based on the stored input mode use record, when the additional information is not considered, the preferred input mode further comprising information associated with the input interface provider and the input type.

13. The user device of claim 12, wherein the controller to further identify the preferred input mode associated with the application identifier and the additional information based on the stored input mode use record, when the additional information associated with the application identifier is considered.

14. The user device of claim 12, wherein to identify whether to consider the additional information the controller to further determine the preferred input mode based on the additional information use indicator.

15. The user device of claim 9, wherein the control to further:
identify whether a designated input mode exists; and
display, at least partially, an interface in accordance with the designated input mode of the input interface, when the designated input is found.
